Europäisches Patentamt

European Patent Office

Office européen des brevets

(11) Numéro de publication: **0 437 136 A2**

(12) **DEMANDE DE BREVET EUROPEEN**

(21) Numéro de dépôt: 90403712.4

(22) Date de dépôt: 20.12.90

(51) Int. Cl.⁵: **B29C 67/20**

(30) Priorité: 10.01.90 FR 9000216

(43) Date de publication de la demande:
17.07.91 Bulletin 91/29

(84) Etats contractants désignés:
CH DE GB LI NL SE

(71) Demandeur: **MATRA DEFENSE**
**4, rue de Presbourg**
**F-75116 Paris(FR)**

(72) Inventeur: **Marchand, Alain**
**17, rue du Val**
**F-94240 L'Hay les Roses(FR)**

(74) Mandataire: **Fort, Jacques**
**CABINET PLASSERAUD 84, rue d'Amsterdam**
**F-75009 Paris(FR)**

(54) **Procédé de fabrication d'article imprégné et application du procédé à la fabrication de composants de paliers rotatifs.**

(57) Le procédé utilisable, en particulier pour constituer la cage de roulement, permet de constituer des articles poreux imprégnés de lubrifiant. Suivant le procédé, on prépare un mélange de matière de base et de laine métallique constituée de fibres dont le diamètre moyen ne dépasse pas 0,1 mm, le rapport des teneurs en volume de matière et de fibres étant compris entre 100/30 et 100/200 et ladite matière étant de nature telle qu'elle permet de constituer une ébauche solide à faible coefficient de frottement et faible fragilité par moulage, injection, extrusion ou pultrusion ; on constitue ladite ébauche ; on usine ladite ébauche à la forme finale ; on élimine la laine métallique par attaque chimique pour créer une porosité ouverte ; et on imprègne les pores par un lubrifiant.

EP 0 437 136 A2

## PROCEDE DE FABRICATION D'ARTICLE IMPREGNE ET APPLICATION DU PROCEDE A LA FABRICATION DE COMPOSANTS DE PALIERS ROTATIFS

La présente invention concerne les procédés de fabrication d'articles poreux imprégnés. Elle trouve une application particulièrement importante, bien que non exclusive, dans la fabrication de composants appartenant à des paliers et notamment des roulements à billes, aiguilles ou rouleaux. Dans de tels paliers, les éléments de roulement sont interposés entre deux bagues et leur espacement circonférentiel est maintenu constant par une cage qui évite leur venue en contact.

Un des problèmes rencontrés dans la réalisation de roulements tournant à grande vitesse est constitué par la valeur élevée que prend le couple résistant, particulièrement gênante dans le cas des roulements utilisés en micromécanique, par exemple dans des centrales gyroscopiques.

On a tenté déjà de réduire le frottement dans les roulements en constituant la cage en un matériau autolubrifiant, tel qu'un polyamide chargé ou une toile imprégnée de résine phénolique. L'amélioration obtenue par ce procédé est relativement limitée.

Le même problème se pose pour l'utilisation de paliers lisses à des vitesses linéaires très élevées, correspondant par exemple à une vitesse de rotation dépassant 100 tours par seconde pour un diamètre de quelques centimètres.

L'invention vise à fournir un procédé de fabrication d'articles poreux imprégnés de lubrifiant, ayant et conservant un faible coefficient de frottement même à vitesse élevée, présentant une résistance à l'usure également élevée, utilisables dans une large plage de températures.

Pour cela l'invention part de la constatation qu'on peut améliorer la lubrification en utilisant l'imprégnation d'un matériau présentant une porosité ouverte élevée et constituée de pores de très faible diamètre et en particulier obtenir un coefficient de frottement beaucoup plus faible qu'avec un matériau chargé non poreux.

L'invention propose en conséquence un procédé de fabrication d'articles poreux imprégnés suivant lequel : on prépare un mélange de matière de base et de laine métallique constituée de fibres dont le diamètre moyen ne dépasse pas 0,1 mm, le rapport des teneurs en volume de matière et de fibres étant compris entre 100/30 et 100/200 et ladite matière étant de nature telle qu'elle permet de constituer une ébauche solide à faible coefficient de frottement et faible fragilité par moulage, injection, extrusion ou pultrusion ; on élabore ladite ébauche ; on usine l'ébauche pour lui donner la forme finale de l'article ; on élimine la laine métallique par attaque chimique pour créer une porosité ouverte ; et on remplit les pores de lubrifiant par imprégnation.

Des métaux de natures diverses peuvent être utilisés pour générer la porosité. Le fer et surtout l'acier semblent particulièrement intéressants, car ils sont disponibles sous forme de laine constituée de cheveux métalliques de diamètre faible et régulier, par exemple d'environ 0,05 mm, et ils sont éliminés facilement en plongeant la préforme usinée dans un bain d'acide chaud. L'aluminium est également utilisable, bien qu'il ne permette pas de fabriquer une laine aussi fine que le fer : il peut être éliminé par attaque à la soude. D'autres métaux encore, notamment le cuivre, peuvent être adoptés, à condition que le métal choisi soit compatible avec la température de formage des ébauches.

Du fait que l'usinage est effectué avant imprégnation, il ne risque pas de fermer les pores et de gêner l'introduction du lubrifiant. Au contraire il tend à faire apparaître et à faire déboucher en surface les fibres de laine métallique. Le lubrifiant peut être de nature courante. Les huiles synthétiques seront généralement préférables aux huiles naturelles, du fait qu'elles sont moins oxydables. A l'huile peut être ajouté un épaississant ou un additif. De nombreuses graisses peuvent également être utilisées.

Pour augmenter encore la lubrification, les additifs ayant un effet lubrifiant connu peuvent être ajoutés à la matière de base lors du mélange. On peut notamment citer le polytétrafluoréthylène, le carbone, le bisulfure de molybdène, le plomb et l'argent. La teneur ne dépasse pas quelques pour cent en volume dans le cas du carbone, du plomb, de l'argent et du bisulfure de molybdène. Une teneur comprise entre 1 et 5 % sera généralement utilisée. Par contre, la teneur peut être beaucoup plus élevée dans le cas du polytétrafluoréthylène et dépasser légèrement 50 %.

Dans la description qui suit, les étapes successives d'un procédé utilisable pour réaliser une cage de roulement à billes seront définies avec davantage de détail.

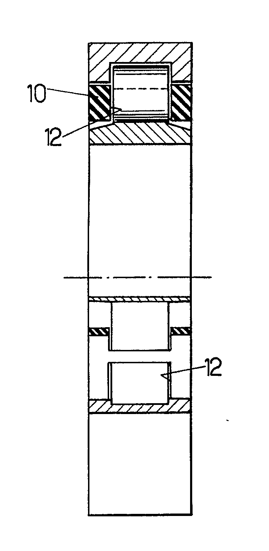

La cage peut avoir la constitution schématisée sur la figure unique, qui est une vue en élévation, en coupe partielle. La cage se présente sous forme d'une douille 10 percée de trous radiaux 12 de réception de billes. De telles cages, ayant une épaisseur de quelques millimètres, sont fréquemment utilisées dans des roulements dont le diamètre total est de quelques centimètres.

La première étape de procédé consiste à mélanger une matière de base qui constituera une matrice avec de la laine métallique dans des proportions qui peuvent varier largement. En général cependant, la laine sera constituée de fibres en cheveux de fer ou d'acier ayant un diamètre d'environ 0,05 mm et les teneurs en matière de base et en fer (ou acier) du mélange sont sensiblement égales en volume. La matière de base est choisie en fonction du mode de fabrication des ébauches et des contraintes de fonctionnement.

Dans le cas de cages de paliers prévus pour des vitesses élevées, il est nécessaire de choisir, parmi les matériaux thermo-plastiques et thermo-durcissables, ceux qui conservent des propriétés mécaniques satisfaisantes sous frottement. On peut notamment citer les polyamide-imides tels que celui vendu sous la marque "TORLON" et les polyéther-éther-cétones tels que celle vendues sous la marque "PEEK" ou "VITREX" de la société I.C.I. Ces matières permettent de constituer des articles conservant des propriétés satisfaisantes entre -45° C et 180° C environ.

La matière de base, à l'état de granulés ou de poudre, et la laine sont mélangées pendant une durée suffisante pour obtenir une répartition uniforme. Surtout dans le cas où l'article à fabriquer a une faible épaisseur, on fait passer le mélange à travers un broyeur qui réduit la longueur des fibres de laine métallique. Au cours du mélange, il peut être utile de chauffer la matière de base pour augmenter sa plasticité. Les additifs éventuels sont ajoutés avant mélange. Un rapport d'environ 100/100 entre les teneurs en volume de matière de base et de laine donne en général des résultats satisfaisants.

A partir du mélange on fabrique une ébauche, constituée par une barre à section circulaire, par exemple dans un moule à injection si le matériau de base est thermodurcissable. Des préformes dont les dimensions sont identiques à celles de l'article définitif sont ensuite réalisées par tronçonnement de la barre, décolletage et perçage.

Les préformes sont ensuite soumises à une attaque chimique par un réactif approprié, amenant le métal à l'état de composé soluble dans le réactif ou à l'état volatile. On peut notamment utiliser :
- pour le fer ou l'acier, une attaque par une solution acide telle que :

> . **acide chlorhydrique d 1,19 = 80 ml**
> . **eau                                  = 20 ml**
> . **acide nitrique       d 1,14 =  2 ml**

à 60° C suivie d'un rinçage ; la durée de l'attaque dépend de la taille des pièces ; elle est d'une heure environ lorsque la pièce a une taille de quelques millimètres.
- pour l'aluminium, une attaque par une solution de soude caustique, suivie d'un rinçage.

L'attaque chimique détruit la laine métallique partout où elle est accessible, dans toute la masse de la préforme si l'épaisseur ne dépasse pas 1 cm environ lorsque les fils ont un diamètre qui ne dépasse pas 0,1 mm. L'attaque laisse subsister une porosité ouverte et des cavités reliées entre elles, permettant l'absorption de lubrifiant, l'introduction de lubrifiant dans les pores pour imprégner la préforme est réalisée par un processus qui dépend de la nature du lubrifiant choisi.

Dans le cas d'imprégnation par une huile naturelle ou synthétique, l'imprégnation peut généralement se faire par simple immersion dans l'huile chauffée pour réduire sa viscosité.

Dans le cas d'imprégnation par une graisse, éventuellement chargée, l'imprégnation exigera souvent une alternance de mise sous vide de la préforme pour évacuer les pores, puis l'imprégnation par application de graisse sous pression.

L'invention est susceptible de très nombreuses applications. On peut citer, à titre d'exemple, la réalisation des cages et même des bagues de roulements à billes, à aiguilles ou à rouleaux. On peut également constituer des bagues lisses de paliers, si nécessaire après usinage de finition de la surface de friction.

A titre d'exemple, on donnera maintenant les étapes d'un procédé de fabrication d'une cage de roulement miniature destinée à fonctionner à vitesse élevée.

Le roulement en question, destiné à une toupie de gyroscope, est destiné à porter un arbre tournant à 400 tours par seconde, de 4 mm de diamètre. Le roulement comporte sept billes de 2 mm de diamètre et il a un diamètre extérieur hors tout de 23 mm et une longueur axiale de 4,8 mm.

La cage destinée au roulement présentait un diamètre interne de 7,2 mm et un diamètre externe de 9,27 mm. L'ébauche était constituée par une barre obtenue par extrusion d'un mélange "PEEK" et de 15 % en volume de laine d'acier fabriquée par la société GERVOIS. Les essais ont montré que la teneur en acier peut être largement supérieure à cette valeur et même dépasser 20 %. Les opérations d'usinage, d'attaque chimique et d'imprégnation ont été celles définies plus haut.

**Revendications**

1. Procédé de fabrication d'articles poreux imprégnés, caractérisé en ce qu'on prépare un mélange de matière de base et de laine métallique constituée de fibres dont le diamètre moyen ne dépasse pas 0,1 mm, le rapport des teneurs en volume de matière et de fibres étant compris entre 100/30 et 100/200 et ladite matière étant de nature telle qu'elle permet de constituer une ébauche solide cohérente à faible coefficient de frottement et faible fragilité par moulage, injection, extrusion ou pultrusion ; on constitue ladite ébauche ; on usine ladite ébauche à la forme finale ; on élimine la laine métallique par attaque chimique pour créer une porosité ouverte ; et on remplit les pores de lubrifiant par imprégnation.

2. Procédé selon la revendication 1, caractérisé en ce que la laine est constituée de fibres de fer ou d'acier qu'on élimine par attaque à l'acide chaud ou d'aluminium qu'on élimine par attaque à la soude.

3. Procédé selon la revendication 1 ou 2, caractérisé en ce que l'étape de mélange est suivie d'un broyage destiné à réduire la longueur des fibres de la laine métallique.

4. Procédé selon la revendication 1, 2 ou 3, caractérisé en ce que la matière de base est constituée par un polyamide-imide ou polyéther-éther-cétone.

5. Procédé selon l'une quelconque des revendications précédentes, caractérisé en ce que les teneurs en volume de matière et de laine métallique sont dans un rapport d'environ 100/100.

6. Procédé selon l'une quelconque des revendications précédentes, caractérisé en ce qu'on ajoute au mélange un additif choisi parmi le carbone, le bisulfure de molybdène, le plomb, l'argent, à une teneur de quelques pour cent du volume du mélange total, et le polytétrafluoréthylène.

7. Procédé selon l'une quelconque des revendications précédentes, caractérisé en ce que l'ébauche est fabriquée par extrusion d'une préforme, tronçonnage de la préforme et décolletage.

8. Procédé selon l'une quelconque des revendications précédentes, caractérisé en ce qu'on remplit les pores par immersion ou par variation de pression.

9. Application du procédé selon l'une quelconque des revendications précédentes à la fabrication d'éléments de paliers à grande vitesse.

10. Application selon la revendication 9 à la fabrication de cage de roulements à billes, à aiguilles ou à rouleaux, la porosité ouverte occupée par le lubrifiant représentant 15 % en volume de la cage.